# DEMANDE DE BREVET EUROPEEN

(11) **EP 0 583 200 A1**
(43) Date de publication de la demande: **16.02.1994**
(21) Numéro de dépôt: 93402035.5
(22) Date de dépôt: 10.08.1993
(51) Int. Cl.: B01D 11/04

(54) **Procédé d'extraction par solvant en continu avec traitement par ultrasons et colonne pour la mise en oeuvre de ce procédé**

(30) Priorité: 12.08.1992 FR 9209945
(71) Demandeur: COMMISSARIAT A L'ENERGIE ATOMIQUE, F-75015 Paris (FR); GIE-GRAINVAL, F-45072 Orleans Cédex 02 (FR)
(72) Inventeur: Rivalier, Patrick, F-34130 Mauguio (FR); Ros, Pierre, F-30150 Sauveterre (FR); Molina, Isabelle, F-63200 Riom (FR); Duvoux, Jacques-Hubert, F-41350 Vineuil (FR)
(74) Mandataire: Des Termes, Monique

(57) **Abrégé**

L'invention concerne un procédé et une colonne d'extraction liquide-liquide ou solide-liquide avec traitement par ultrasons.

Selon ce procédé, on met en contact à contre-courant dans la colonne (1) remplie d'un garnissage (11, 13) une phase liquide ou solide, par exemple des graines d'onagre, introduite dans le décanteur supérieur (3), avec une phase liquide solvant, par exemple de l'hexane, introduite par (17) en appliquant des pulsations dans la colonne par les moyens de pulsation (37 et 39).

Pour améliorer l'extraction, on applique de plus des ultrasons dans la colonne au moyen des ensembles (41), (43) et (45) dont les emplacements sont choisis en fonction du profil d'extraction du constituant à extraire.

## Description

La présente invention a pour objet un procédé d'extraction par solvant, liquide-liquide ou solide-liquide, en continu, utilisable notamment dans les industries agro-alimentaires pour extraire par exemple les matières grasses de graines oléagineuses dans le cas de l'extraction solide-liquide.

Ces procédés d'extraction consistent à mettre en contact, généralement à contre-courant, une phase solide ou liquide et une phase liquide (solvant) pour transférer certains constituants de la phase solide ou liquide dans la phase liquide solvant. Habituellement, on réalise cette mise en contact dans une colonne d'échange telle qu'une colonne pulsée, dans laquelle la phase lourde, descend par gravité et la phase légère monte à contre-courant. Pour augmenter le temps de séjour des deux phases dans la colonne, celle-ci est munie d'un garnissage qui forme des obstacles temporaires au cheminement direct des deux phases. On soumet de plus le mélange des deux phases à des pulsations pour favoriser le contact entre celles-ci.

De manière générale, les temps de contact en extraction solide-liquide doivent être longs car la cinétique du transfert est relativement lente. Il est donc nécessaire de disposer de colonnes pulsées de hauteur importante afin d'obtenir un bon rendement d'extraction.

Aussi, il serait intéressant d'améliorer la cinétique de transfert entre les deux phases pour limiter la hauteur des colonnes utilisées.

Une colonne pulsée convenant à l'extraction solide-liquide est décrite par exemple dans FR-A- 2 663 558. Dans cette colonne, on utilise un garnissage particulier constitué de paniers et de couronnes horizontales qui permettent d'augmenter le temps de séjour de la phase lourde solide dans la colonne, l'évacuation des solides contenus dans les paniers étant assurée par l'utilisation de moyens de pulsation appropriés.

On connaît aussi des procédés d'extraction solide-liquide utilisant les ultrasons pour extraire des produits oléagineux à partir de graines oléagineuses, comme il est décrit dans EP-A- 0 243 220.

Dans ce cas, on réalise après le traitement d'extraction sous agitation de l'huile et des matières grasses dans le solvant, un traitement par ultrasons des graines en présence de solvant pour extraire l'huile liée et enfermée dans les cellules elles-mêmes qui n'ont pas été brisées par le traitement mécanique initial des graines.

L'installation utilisée pour mettre en oeuvre ce procédé a l'inconvénient de comporter plusieurs étages, en particulier un stade d'extraction par solvant et un stade de traitement par ultrasons.

La présente invention a précisément pour objet un procédé d'extraction en continu dans une colonne, utilisant simultanément les ultrasons, qui pallie les inconvénients précités.

Selon l'invention, le procédé pour extraire dans une première phase liquide solvant certains constituants d'une seconde phase solide ou liquide consiste à mettre en contact la seconde phase solide ou liquide avec la première phase liquide solvant à contre-courant dans une colonne d'échange disposée verticalement et remplie d'un garnissage destiné à augmenter le temps de séjour des deux phases dans la colonne, et il se caractérise en ce que l'on soumet de plus les deux phases circulant dans la colonne à l'action d'ultrasons provenant d'un ou plusieurs émetteurs d'ultrasons disposés autour de la colonne en des emplacements choisis en fonction de la cinétique d'extraction du constituant à extraire par la phase liquide solvant utilisée.

Avec le procédé de l'invention on améliore ainsi, dans la colonne elle-même, la cinétique de transfert entre la seconde phase solide ou liquide et la première phase liquide solvant grace au phénomène de cavitation engendré par les ultrasons lors de la mise en contact des deux phases.

De plus, grâce à une disposition appropriée des émetteurs d'ultrasons dans la colonne, on profite pleinement de l'effet des ultrasons en les faisant agir aux emplacements où ils sont les plus efficaces dans la colonne. Ces emplacements sont choisis en fonction des cinétiques d'extraction et dépendent donc des constituants à extraire et de la phase liquide solvant utilisée.

Ainsi, lorsque le rendement d'extraction augmente de façon linéaire avec la hauteur de la colonne, les émetteurs d'ultrasons sont régulièrement répartis sur toute la hauteur de la colonne.

Un profil d'extraction de ce type est par exemple obtenu lors de l'extraction solide-liquide des saponines stéroidiques de graines de fénugrec par l'éthanol.

En revanche, lorsque le rendement d'extraction du constituant à extraire varie de façon à atteindre rapidement sa valeur limite et que le solvant constitue la phase légère, les émetteurs d'ultrasons sont disposés uniquement dans la partie inférieure et la partie médiane de la colonne. Lorsque le solvant constitue la phase lourde, les émetteurs d' ultrasons sont dans ce cas, disposés uniquement dans la partie supérieure et la partie médiane de la colonne.

Des profils d'extraction de ce type sont obtenus par exemple lors de l'extraction des sapogénines stéroidiques de graines de fénugrec par l'hexane, et lors de l'extraction des matières grasses des graines de tournesol, d'onagre ou de bourrache par l'hexane.

L'invention a également pour objet une colonne pulsée d'échange entre une première phase liquide solvant et une seconde phase solide ou liquide, comportant un fût cylindrique vertical de section circulaire, muni d'un garnissage, des moyens pour mettre les deux phases en circulation dans la colonne à contre-courant, et des moyens pour appliquer des pulsations aux deux phases, caractérisé en ce que la colonne comprend de plus des émetteurs d'ultrasons annulaires disposés autour du fût cylindrique de la colonne rempli du garnissage, au moins sur une partie de ce fût.

Lorsque la seconde phase est une phase lourde solide, le garnissage est de préférence constitué de paniers et de couronnes et les moyens de pulsation sont aptes à produire des pulsations de forte énergie et de faible fréquence, permettant d'évacuer la seconde phase solide des paniers à des instants déterminés.

L'utilisation d'un garnissage paniers-couronnes avec des émetteurs d'ultrasons est très intéressant car il permet d'optimiser les effets des ultrasons avec ceux des colonnes pulsées.

En effet, le choix d'un tel garnissage augmente considérablement le temps de séjour de la phase solide dans la colonne et de ce fait le temps d'application des ultrasons.

Aussi, avec ce garnissage, on place de préférence les émetteurs d'ultrasons au niveau des paniers, pour bénéficier pleinement de l'effet des ultrasons.

Lorsque la seconde phase est une phase liquide, le garnissage peut être constitué par exemple de plateaux perforés, ou de disques et couronnes alternés.

D'autres caractéristiques et avantages de l'invention apparaîtront mieux à la lecture de la description qui suit donnée bien entendu à titre illustratif et non limitatif en référence au dessin annexé sur lequel
- la figure 1 est une représentation schématique en coupe verticale d'une colonne d'échange conforme à l'invention, destinée à l'extraction solide-liquide,
- la figure 2 est une vue à plus grande échelle d'un tronçon de la colonne de la figure 1, et
- les figures 3 et 4 sont des courbes représentant deux types d'évolution des rendements d'extraction (en %) en fonction de la hauteur (en m) de la colonne d'extraction.

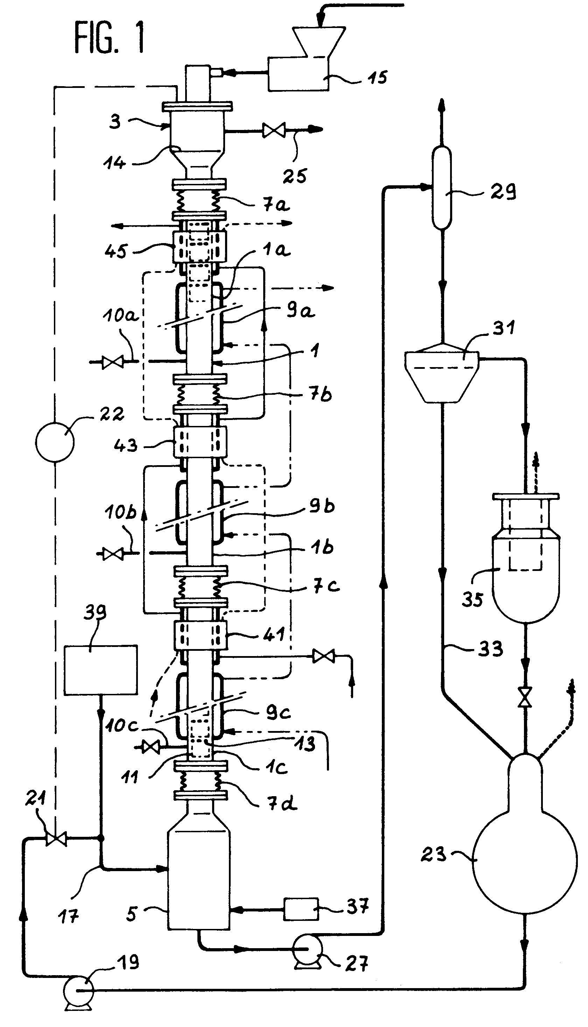

En se reportant à la figure 1, on voit que la colonne de l'invention comprend un fût (1) cylindrique de section circulaire disposé verticalement et constitué de 3 tronçons 1a, 1b et 1c qui sont solidarisés entre eux ainsi qu'avec le décanteur supérieur (3) et le décanteur inférieur (5) par des assemblages à brides (7a), (7b), (7c) et (7d) munis de soufflets, par exemple en polytétrafluoréthylène, destinés à amortir les vibrations.

Les tronçons du fût de colonne 1a, 1b et 1c peuvent être réalisés en acier inoxydable 316L afin de permettre une bonne transmission des ultrasons, et ils ont par exemple un diamètre interne de 54,8mm, un diamètre externe de 60,3mm et une longueur de 1,134m.

Chaque tronçon du fût peut être porté à une température supérieure à la température ambiante par circulation d'eau chaude dans une double enveloppe de chauffage (9a), (9b), (9c).

La circulation de l'eau chaude entre les enveloppes (9a), (9b) et (9c) est indiquée en traits mixtes. Les tronçons (1a), (1b) et (1c) sont de plus équipés de prises d'échantillons (10a), (10b) et (10c).

Le fût de colonne (1) est muni d'un garnissage intérieur qui peut être constitué d'un empilement de paniers (11) et de couronnes (13) alternés, comme il est décrit dans FR-A-2 663 558.

Bien entendu, d'autres garnissages tels que les garnissages disques-couronnes convenant à l'extraction solide-liquide pourraient être utilisés.

A titre d'exemple, dans le garnissage représenté, les paniers (11) sont réalisés en acier inoxydable pour favoriser la transmission des ultrasons ; ils ont un fond en tôle perforée ayant une épaisseur de 1mm, avec des ouvertures d'un pas de 3mm et une transparence de 35% ; la hauteur des paniers est de 30mm et leur diamètre est de 38mm. Les couronnes (13) également en acier inoxydable, disposées alternativement entre les paniers, sont constituées par des plateaux pleins de 54mm de diamètre ayant une ouverture centrale d'un diamètre de 17mm. L'espacement entre les couronnes est de 70mm.

Les deux décanteurs (3) et (5) sont par exemple en verre. A titre d'exemple, le décanteur supérieur (3) a un diamètre de 200mm et une hauteur utile de 225mm, et le décanteur inférieur (5) a un diamètre de 150mm et une hauteur utile de 650mm. Le décanteur supérieur est muni d'une tôle maintenue sur une grille perforée (14) afin d'éviter le passage des solides dans le circuit de soutirage de la phase liquide.

La phase solide est introduite à la base du décanteur (3) par la trémie doseuse (15). La phase liquide est introduite dans le décanteur inférieur (5) par la conduite (17) munie d'une pompe (19) à partir d'une réserve de solvant (23), le débit étant régulé par une vanne (21) dont l'ouverture est asservie (22) au niveau de liquide dans le décanteur supérieur (3). La phase liquide est évacuée de la colonne à la partie supérieure du décanteur (3) par la conduite (25).

Le soutirage de la phase solide épuisée est effectué à la partie inférieure du décanteur (5) par une pompe volumétrique (27), le mélange solide-liquide soutiré par la pompe (27) traverse un pot casse-siphon (29), puis un tamis vibrant avec une toile de nylon (31) ayant par exemple une ouverture de mailles de 20µm pour séparer le liquide du solide épuisé. Le liquide est recyclé par la conduite (33) dans la réserve de solvant (23) tandis que le solide épuisé est stocké dans le pot de stockage (35).

La mise en mouvement des deux phases dans la colonne se fait par l'intermédiaire de deux systèmes de pulsations. Un premier système mécanique (37) situé à la base du décanteur (5), de faible énergie et de fréquence élevée, assure la fluidisation de la phase solide dans la phase liquide. Un second système de pulsations (39) qui est un système pneumatique de forte énergie et de faible fréquence, produit des pulsations dans la phase liquide introduite dans la colonne, ce qui permet d'évacuer périodiquement la phase solide des paniers (11).

Conformément à l'invention, cette colonne est équipée de plus d'ensembles (41, 43 et 45) permettant d'appliquer des ultrasons, qui sont répartis régulièrement autour du fût (1) de la colonne.

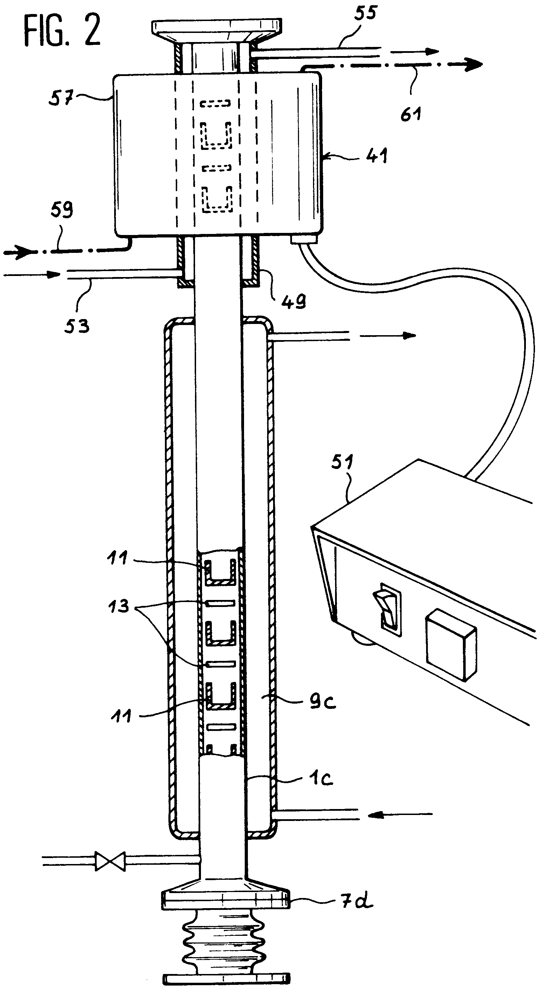

Sur la figure 2, on a représenté plus en détail le tronçon (1c) de la colonne de la figure 1 équipé de l'ensemble (41).

Sur cette figure 2, on voit le tronçon (1c) entouré de la chemise de chauffage (9c) parcourue d'eau chaude ainsi que l'assemblage par brides (7d). L'ensemble (41) permettant de soumettre les phases circulant dans la colonne à l'action d'ultrasons, comprend un tube (49) disposé concentriquement autour du tronçon de colonne (1c) et soudé sur celui-ci ; ce tube (49) comporte des transducteurs d'ultrasons relié de façon classique à un générateur électrique (51). L'espace entre le fût de colonne (1c) et le tube transducteur d'ultrasons (49) peut être parcouru par de l'eau déminéralisée introduite par la conduite (53) et évacuée par la conduite (55). Cette circulation d'eau a pour effet
- de transmettre les ultrasons,
- d'évacuer les calories à proximité des tubes transducteurs d'ultrasons, ce qui limite les risques de dégradation thermique des produits, et
- d'éviter en cas de fuites, le contact direct entre la phase liquide circulant dans la colonne, par exemple un solvant inflammable, avec le transducteur d'ultrasons.

La circulation de l'eau déminéralisée entre les ensembles (41), (43) et (45) est représentée par une ligne continue sur la figure 1.

Par ailleurs, le tube transducteur d'ultrasons (49) est protégé des risques d'explosion par une enceinte de protection (57) parcourue par de l'air déshuilé et déshumidifié, à une pression supérieure à la pression ambiante, introduit par le conduit (59) et évacué par le conduit (61).

Sur la figure 1, la circulation d'air entre les ensembles d'application des ultrasons (41), (43) et (45) est représentée en tirets.

A titre d'exemple, les tubes transducteurs (49) peuvent avoir un diamètre interne de 73mm et une hauteur utile de 203mm.

Bien que dans cet exemple de réalisation, on ait représenté 3 ensembles d'application d'ultrasons, il va de soi que la colonne peut en comporter 1 seul ou beaucoup plus et qu'ils peuvent être disposés autour de la colonne en des emplacements différents.

En effet, conformément à l'invention, l'emplacement des ensembles (41), (43) et (45) est choisi en fonction de la cinétique d'extraction du constituant à extraire par le solvant utilisé.

Pour déterminer cette cinétique d'extraction, on réalise l'extraction dans un réacteur agité ne comportant pas d'ensembles d'application d'ultrasons et on détermine les pourcentages d'extraction en fonction du temps de contact. Ainsi, on peut obtenir deux types de courbes :
- un premier type correspondant à une évolution pratiquement linéaire du rendement d'extraction en fonction de la hauteur de la colonne, et
- un second type correspondant à une évolution selon laquelle le rendement d'extraction augmente très rapidement pour tendre ensuite vers une valeur maximale très lentement.

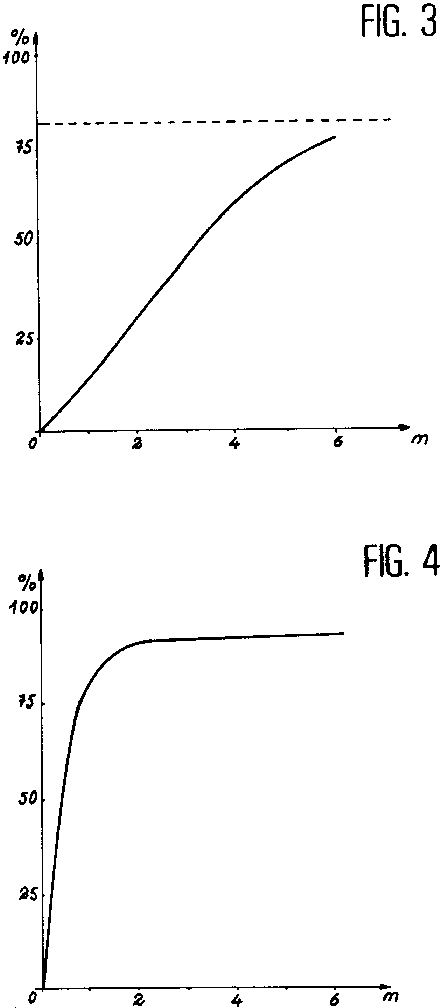

Sur la figure 3, on a représenté une courbe d'extraction correspondant au premier type. Cette courbe qui illustre les variations du rendement d'extraction (en %) en fonction de la hauteur de la colonne (en m), a été obtenue lors de l'extraction des saponines stéroidiques à partir de graines de fénugrec par l'éthanol de titre 70°.

Sur cette figure, on voit que le pourcentage d'extraction augmente pratiquement de façon linéaire avec la hauteur de la colonne.

Avec une telle cinétique d'extraction, il est avantageux de disposer les émetteurs d'ultrasons à intervalles réguliers sur toute la partie du fût muni du garnissage, ce qui correspond à la disposition représentée sur la figure 1.

Dans ce cas, il est de plus préférable d'utiliser des émetteurs d'ultrasons de puissance moyenne, ayant par exemple une puissance de 10 à 1000kW/m³ de volume sonifié.

Sur la figure 4, on a représenté une courbe d'extraction du second type, qui a été obtenue lors de l'extraction des sapogénines stéroïdiques à partir de graines de fénugrec qui constituent la phase lourde par de l'hexane.

Sur cette figure 4, on remarque que le rendement d'extraction (en %) augmente très rapidement en tête de la colonne et qu'il tend ensuite lentement vers sa valeur limite.

Dans ce cas, il est avantageux de disposer les émetteurs d'ultrasons uniquement dans la partie inférieure et au milieu de la colonne, par exemple d'utiliser uniquement les ensembles émetteurs d'ultrasons (41) et (43).

Par ailleurs, il est préférable d'utiliser des émetteurs d'ultrasons de forte puissance, ayant par exemple une puissance de 10³ à 10⁶kW/m³ de volume sonifié.

Dans ce dernier cas, on peut aussi diminuer l'espacement entre les éléments de garnissage dans la partie inférieure de la colonne par rapport à l'espacement des éléments dans la partie supérieure. Ainsi, on augmente le temps de séjour de la phase solide dans cette partie de la colonne où le transfert entre les phases est amélioré par les ultrasons.

A titre d'exemples, on décrit ci-après les résultats obtenus en utilisant l'installation représentée sur les figures 1 et 2 pour extraire dans de l'hexane les matières grasses de graines d'onagre en opérant de la façon suivante.

On fait circuler à 30°C dans la colonne l'hexane, à contre-courant de graines d'onagre ayant une teneur totale en matière grasse de 32,4%, qui ont été préalablement traitées sur un aplatisseur à cylindres lisses, en introduisant les graines d'onagre à un débit de 1,7kg/h. On règle le débit de soutirage de la phase liquide à 4l/h et on applique dans la colonne des pulsations mécaniques de d'amplitude : 15mm et de fréquence : 75 coups/min et des pulsations pneumatiques de pression 300mbar, de fréquence : 1coup/min, et d'une durée: 1,5s. On applique par ailleurs des ultrasons d'une fréquence de 33kHz et d'une puissance de 560W, au moyen des ensembles (41) et (43).

On recueille ainsi dans le pot (35) un tourteau contenant 3% des matières grasses totales, ce qui représente un rendement d'extraction de 93,6%.

Si l'on réalise la même extraction sans appliquer d'ultrasons, le tourteau contient 4% des matières grasses totales, ce qui représente un rendement d'extraction de 91,3%.

Ainsi, le procédé et la colonne de l'invention permettent d'améliorer le rendement d'extraction.

## Revendications

1. Procédé pour extraire dans une première phase liquide solvant certains constituants d'une seconde phase solide ou liquide, consistant à mettre en contact la seconde phase solide ou liquide avec la première phase liquide solvant à contre-courant dans une colonne d'échange (1) disposée verticalement et remplie d'un garnissage (11, 13) destiné à augmenter le temps de séjour des deux phases dans la colonne, caractérisé en ce que l'on soumet de plus les deux phases circulant dans la colonne à l'action d'ultrasons provenant d 'un ou plusieurs émetteurs d'ultrasons (41, 43, 45)disposés autour de la colonne, en des emplacements choisis en fonction de la cinétique d'extraction du constituant à extraire par la première phase liquide solvant utilisée.

2. Procédé selon la revendication 1, caractérisé en ce que le rendement d'extraction du constituant à extraire évoluant de façon linéai re en fonction de la hauteur de la colonne, les émetteurs d'ultrasons sont réguLièrement répartis sur toute la hauteur de la colonne.

3. Procédé selon la revendication 1, caractérise en ce que le rendement d'extraction du constituant à extraire évoluant de façon à atteindre rapidement sa valeur Limite, les émetteurs d'ultrasons sont disposés uniquement dans la partie inférieure et la partie médiane de la colonne.

4. Procédé selon la revendication 1, caractérisé en ce que le rendement d'extraction du constituant à extraire évoluant de façon à atteindre rapidement sa valeur limite, les émetteurs d'ultrasons sont disposés uniquement dans la partie supérieure et la partie médiane de la colonne.

5. Colonne pulsée d'échange entre une première phase liquide solvant et une deuxième phase solide ou liquide, comportant un fût (1) cylindrique vertical de section circulaire, muni d'un garnissage (11, 13), des moyens (15, 17) pour mettre les deux phases en circulation dans la colonne et des moyens (37, 39) pour appliquer des pulsations aux deux phases, caractérisée en ce qu'elle comprend de plus des émetteurs d'ultrasons annulaires (41, 43, 45) disposés autour du fût cylindrique (1) de la colonne rempli du garnissage au moins sur une partie de ce fût.

6. Colonne selon la revendication 5, caractérisée en ce que la seconde phase étant une phase lourde solide, le garnissage est constitué de paniers (11) et de couronnes (13) et en ce que les moyens de pulsation (37, 39) sont aptes à produire des pulsations de forte énergie et de faible fréquence, permettant d'évacuer la seconde phase solide des paniers à des instants déterminés.

7. Colonne selon l'une quelconque des revendications 5 et 6, caractérisée en ce que les émetteurs d'ultrasons (41, 43, 45) sont disposés à intervalles réguliers sur toute la partie du fût muni du garnissage.

8. Colonne selon la revendication 7, caractérisé en ce que les émetteurs d'ultrasons ont une puissance de 10 à 1000kW/m³ de volume sonifié.

9. Colonne selon l'une quelconque des revendications 5 et 6, caractérisée en ce que les émetteurs d'ultrasons (41, 43) sont disposés dans la partie inférieure de la colonne et au milieu de la colonne.

10. Colonne selon la revendication 9, caractérisée en ce que les émetteurs d'ultrasons ont une puissance de 10³ à 10⁶ kW/m³ de volume sonifié.

11. Colonne selon l'une quelconque des revendications 9 et 10, caractérisée en ce que l'espacement entre les éléments (11, 13) formant le garnissage est plus faible dans la partie inférieure de la colonne que dans la partie supérieure.

12. Colonne selon l'une quelconque des revendications 5 à 11, caractérisée en ce que chaque émetteur d'ultrasons comprend un tube transducteur d'ultrasons (49) disposé concentriquement autour du fût (1) de la colonne, et en ce que la colonne comprend des moyens (53, 55) pour faire circuler de l'eau entre le tube transducteur d'ultrasons (49) et la paroi externe du fût (1) de la colonne.

13. Colonne selon la revendication 12, caractérisée en ce que le tube transducteur d'ultrasons (49) est protégé par une enceinte (57) dans laquelle circule de l'air sous pression.
